# EUROPEAN PATENT APPLICATION

(11) **EP 4 059 683 A1**
(43) Date of publication of application: **21.09.2022**
(21) Application number: 20887032.9
(22) Date of filing: 11.11.2020
(51) Int. Cl.: B29B 9/06, C08K 5/00, C08L 23/02, C08L 23/12, C08L 23/16, C08L 91/06, C08K 3/04, C08K 3/34, B29B 7/48, B29B 7/74

(54) **POLYOLEFIN RESIN COMPOSITION CONTAINING PIGMENT, COLORED RESIN PELLETS, AND METHOD FOR PRODUCING SAME**

(30) Priority: 11.11.2019 JP 2019204302; 11.11.2019 JP 2019204303
(71) Applicant: Prime Polymer Co., Ltd., Tokyo 105-7122 (JP)
(72) Inventor: HIROTA, Shigekatsu, Sodegaura-shi, Chiba 299-0265 (JP); HIRANO, Ichinosuke, Sodegaura-shi, Chiba 299-0265 (JP); TANAKA, Yukimasa, Sodegaura-shi, Chiba 299-0265 (JP)
(74) Representative: J A Kemp LLP
(86) International application number: PCT/JP2020/042109
(87) International publication number: WO 2021/095777

(57) **Abstract**

It is possible to provide a polyolefin-based resin composition and a colored resin pellet having good colorant dispersibility and low fogging properties and particularly preferred for the production of a molded article for an interior article or interior member of an automobile, by dosing 0.01 parts by weight or more and 2.0% by weight or less of a colorant including at least one pigment selected from a group consisting of carbon black and an organic pigment, and 0.01 parts by weight or more and 2.0 parts by weight or less of a synthetic wax having an average particle diameter of 1 µm or more and 40 µm or less, based on 100 parts by weight of a resin material component including a polyolefin-based resin.

## Description

### Technical Field

The present invention relates to a polyolefin-based resin composition including a pigment, a colored resin pellet, and a method for producing the same.

### Background Art

As a material for molding used for the production of a colored resin molded article, a resin pellet material including a colorant such as a pigment is used.

As the methods of the coloring processing of resin pellets using a colorant, for example, dry blending, masterbatch blending, a method of fixing a colorant to the surfaces of raw material resin pellets, and a method of mixing a colorant with a raw material resin and pelletizing the mixture are known.

Coloring processing by dry blending is performed by dry-mixing a colorant and raw material resin pellets. In order to increase the dispersibility of the colorant in dry blending, a dispersing agent is used as needed. As such a form, a "dry color" obtained by finely grinding a mixture of a pigment and a metallic soap as a dispersing agent is known. This dry color can be dry-mixed with raw material resin pellets to obtain a resin pellet material including a colorant, as a dry blend product.

Polyolefin-based resins are excellent, for example, in moldability, property balance, recycling characteristics, and cost performance and are therefore widely used as resin materials for molding in various industrial fields, for example, daily necessities, the field of construction, the field of household appliances, and automobile parts.

When uniform coloration is required of a molded article using a resin pellet material including a colorant, good dispersibility of the colorant in the resin pellet material is necessary. This point is important, particularly when a colored molded article is used as an interior article or an interior member in a building or an automobile.

Patent Literature 1 discloses that when a masterbatch including a polypropylene resin and a pigment is produced, the dispersed state of the pigment in the polypropylene resin can be improved by using as a dispersing agent a polyolefin wax produced using a metallocene catalyst.

Patent Literature 1 discloses that the polyolefin wax is used as an ultrafine powder having a particle diameter distribution d₉₀ of less than 40 µm.

The polypropylene resin in Patent Literature 1 is for the production of a masterbatch including a pigment and is not a resin material as a matrix for shaping a molded article.

Patent Literature 2 discloses that by using a polyolefin-based resin and a polyolefin-based wax as a fixing agent for fixing a colorant to the surface of a thermoplastic resin molding material in the form of beads or pellets, excellent dispersibility of the colorant is obtained. That is, the polyolefin-based resin in Patent Literature 2 is one component of a fixing agent for fixing a colorant to the surface of a thermoplastic resin molding material in the form of beads or pellets and is not a resin material as a matrix for shaping a molded article.

In Patent Literature 2, as the thermoplastic resin in the form of beads or pellets, high processing temperature engineering plastics such as polyethylene terephthalate resins and polybutylene terephthalate resins are illustrated.

Patent Literature 2 discloses the range of 5 µm to 50 µm as the particle diameters of a polyolefin-based resin and a polypropylene wax utilized as a fixing agent. In addition, Patent Literature 2 discloses 80 to 180°C as treatment temperature when a pigment is fixed by a fixing agent. Further, Patent Literature 2 discloses that in order to increase the dispersibility of a colorant in a molded article, a metallic soap may be used.

Patent Literature 3 discloses a propylene-based resin composition for an automobile interior in which by using a hindered amine light stabilizer having a weight average molecular weight (Mw) of 700 or more as a light resistant stabilizer for obtaining the light discoloration resistance of a molded article, light discoloration resistance and anti-glass fogging can be obtained.

### Citation List

### Patent Literature

Patent Literature 1: Japanese Translation of PCT International Application Publication No. 2003-525329
Patent Literature 2: Japanese Patent Laid-Open No. 2001-279111
Patent Literature 3: Japanese Patent Laid-Open No. 2009-46691

### Summary of Invention

### Technical Problem

In use in a space exposed to temperature differences, a component volatilized from a molded article may adhere to the inner walls forming the space. As such a phenomenon, "fogging" is known in which a component volatilized from an interior article or interior member of an automobile condenses on the surfaces of the windows of the automobile on the inside to cloud the windows white and obstruct the view like a mist.

With a resin molded article obtained by dispersing a colorant using a metallic soap as a dispersing agent, fogging may occur because the metallic soap volatilizes at high temperature and is cooled and condenses on the inner wall surface of a window in contact with low temperature outside air.

Therefore, for a colored resin molded article with which the occurrence of fogging is a problem, like, for example, an interior article or interior member of an automobile, no occurrence of fogging is required in addition to good dispersibility of the colorant in the molded article.

It is an object of the present invention to provide a polyolefin-based resin composition and a colored resin pellet preferred for the production of a molded article having good dispersibility of a colorant including a pigment and low fogging properties.

### Solution to Problem

The present invention includes the following modes.
[1] A polyolefin-based resin composition including
   0.01 parts by weight or more and 2.0 parts by weight or less of a colorant including at least one pigment selected from a group consisting of carbon black and an organic pigment, and
   0.01 parts by weight or more and 2.0 parts by weight or less of a synthetic wax having an average particle diameter of 1 µm or more and 40 µm or less,
   based on 100 parts by weight of a resin material component including a polyolefin-based resin.
[2] The polyolefin-based resin composition according to [1], wherein the synthetic wax is a polypropylene wax.
[3] The polyolefin-based resin composition according to [1] or [2], wherein a number average molecular weight (Mn) of the synthetic wax is 2,000 or more and 20,000 or less.
[4] The polyolefin-based resin composition according to any one of [1] to [3], wherein the polyolefin-based resin is a polypropylene-based resin having a melt flow rate (MFR: ASTM D1238, 230°C, 2160 g load) of 1 g/10 min or more and 100 g/10 min or less.
[5] The polyolefin-based resin composition according to [4], wherein the polypropylene-based resin is a crystalline propylene-ethylene block copolymer having a n-decane soluble content of 17% by weight or more and 25% by weight or less at room temperature, an MFR (ASTM D1238, 230°C, load 2160 g) of 20 g/10 min or more and 40 g/10 min or less, and a mmmm fraction (isotactic pentad fraction) of more than 95.7%.
[6] The polyolefin-based resin composition according to any one of [1] to [5], wherein the resin material component is formed of the polyolefin-based resin.
[7] The polyolefin-based resin composition according to any one of [1] to [5], wherein the resin material component includes 60% by weight or more and 100% by weight or less of the polyolefin-based resin and 0% by weight or more and 40% by weight or less of talc based on 100% by weight of a total amount of the polyolefin-based resin and the talc.
[8] The polyolefin-based resin composition according to [7], including 60% by weight or more and 95% by weight or less of the polyolefin-based resin and 5% by weight or more and 40% by weight or less of the talc based on 100% by weight of the total amount of the polyolefin-based resin and the talc.
[9] The polyolefin-based resin composition according to any one of [1] to [8], wherein the colorant is formed of the carbon black.
[10] The polyolefin-based resin composition according to any one of [1] to [8], wherein the colorant consists of the carbon black and the organic pigment.
[11] The polyolefin-based resin composition according to any one of [1] to [8], wherein the colorant is formed of the organic pigment.
[12] The polyolefin-based resin composition according to any one of [1] to [11], wherein the polyolefin-based resin is in a form of a pellet.
[13] The polyolefin-based resin composition according to [12], being a dry blend.
[14] A colored resin pellet obtained by melt-extruding the polyolefin-based resin composition according to any one of [1] to [11] and molding the polyolefin-based resin composition in a form of a pellet.
[15] The colored resin pellet according to [14], being for production of a molded article.
[16] The colored resin pellet according to [15], wherein the molded article is an interior article or interior member of an automobile.
[17] A method for producing a colored resin pellet, including a step of melt-extruding the polyolefin-based resin composition according to any one of [1] to [11] and molding the polyolefin-based resin composition in a form of a pellet.
[18] The method for producing a colored resin pellet according to [17], wherein the colored resin pellet is for production of a molded article.
[19] The method for producing a colored resin pellet according to [18], wherein the molded article is an interior article or interior member of an automobile.

### Advantageous Effects of Invention

According to the present invention, it is possible to provide a polyolefin-based resin composition and a colored resin pellet preferred for the production of a molded article having good dispersibility of a colorant including a pigment and low fogging properties.

### Description of Embodiments

The present inventors have diligently studied a dispersing agent for colorant dispersion having low fogging properties and capable of obtaining good colorant dispersibility in a molded article, particularly an automobile interior article or interior member, containing a colorant including at least one pigment selected from carbon black and an organic pigment. As a result, the present inventors have obtained new findings that by using a synthetic wax in the form of ultrafine particles having an average particle diameter of 1 µm or more and 40 µm or less as a dispersing agent for a colorant in a polyolefin-based resin, a molded article having good colorant dispersibility and low fogging properties can be obtained. Further, the present inventors have obtained new findings that this ultrafine synthetic wax can also be preferably utilized for a dry blend with a polyolefin-based resin. The present invention has been completed based on these new findings of the present inventors.

A polyolefin-based resin composition according to the present invention includes a resin material component including a polyolefin-based resin, a colorant including at least one pigment selected from the group consisting of carbon black and an organic pigment, and a synthetic wax as a dispersing agent.

Regarding the dosage proportions of these, the colorant is used in an amount selected from the range of 0.01 parts by weight or more and 2.0 parts by weight or less, and the synthetic wax is used in an amount selected from the range of 0.01 parts by weight or more and 2.0 parts by weight or less, based on 100 parts by weight of the resin material component.

The components used for the preparation of the polyolefin-based resin composition according to the present invention will be described below.

### (A) Resin Material Component

The resin material component is a component for molding as a matrix for shaping a molded article and is a resin-containing component including at least a polyolefin-based resin as a resin component for molding. The resin material component may be only formed of a polyolefin-based resin as a resin component or consist of a polyolefin-based resin and talc.

### (A1) Resin Component

As the resin component, one polyolefin-based resin can be used alone, or two or more polyolefin-based resins can be used in combination.

The polyolefin-based resin is not particularly limited as long as it can be utilized for the molding of a target molded article. From polyolefin-based resins that can be produced by known methods, and commercial polyolefin-based resins, one suited to the target application of a molded article should be selected and used.

As the polyolefin-based resin, a polypropylene-based resin having a melt flow rate (MFR) of 1 g/10 min or more and 100 g/10 min or less as measured under the conditions of 230°C and a load of 2160 g in accordance with ASTM D1238 is preferable.

The dosage proportion of the polyolefin-based resin to the entire polyolefin-based resin composition is preferably selected from the range of 70% by weight or more and 99.7% by weight or less. The lower limit of the range of this dosage proportion may be set at 75% by weight, and the upper limit of this dosage proportion may be set at 99% by weight.

The polyolefin-based resin can be used in various forms such as in the form of pellets for the preparation of the polyolefin-based resin composition.

### (A1A) Crystalline Propylene-Ethylene Block Copolymer

As the polypropylene-based resin, a crystalline propylene-ethylene block copolymer having the following characteristics disclosed as an (A) component in Patent Literature 3 is preferable.
- The n-decane soluble content at room temperature is 17% by weight or more and 25% by weight or less.
- The MFR measured under the conditions of 230°C and a load of 2160 g in accordance with ASTM D1238 is 20 g/10 min or more and 40 g/10 min or less.
- The mmmm fraction (isotactic pentad fraction) is more than 95.7%.

The mmmm fraction is the measured value in the propylene homopolymer portion (in 23°C n-decane insoluble content).

The measurement of the n-decane soluble content can be performed by a known method disclosed, for example, in Patent Literature 3, and room temperature as measurement temperature is 23°C ± 5°C.

The component specified as the n-decane soluble content is a component mainly including a propylene-ethylene copolymer, and when the n-decane soluble content is in the above range, the improvement of mechanical characteristics such as rigidity and impact resistance in a molded article can be promoted. From such a viewpoint, the proportion of the n-decane soluble content is further preferably 18% by weight or more and 24% by weight or less.

The MFR (ASTM D1238, the conditions of 230°C and a load of 2160 g) of the crystalline propylene-ethylene block copolymer is further preferably 25 g/10 min or more and 35 g/10 min or less.

The limiting viscosity ([η]a) of the room temperature n-decane soluble content measured in 135°C decalin is preferably 1 dl/g or more and 5 dl/g or less, more preferably 1.5 dl/g or more and 4.0 dl/g or less.

The room temperature n-decane insoluble content mainly includes homopolypropylene (propylene homopolymer) and may sometimes include a small amount, for example, 10 mol % or less, preferably 5 mol % or less, of a monomer other than propylene, such as ethylene.

As the crystalline propylene-ethylene block copolymer, one that satisfies the above properties can be selected for use from products produced using known methods disclosed, for example, in Patent Literature 3, and commercial products.

When the crystalline propylene-ethylene block copolymer is used, a resin composition with which a molded article excellent in mechanical properties such as rigidity and impact resistance can be prepared is obtained.

### (G) Rubber Component

When the crystalline propylene-ethylene block copolymer is used as the resin component, at least one of a propylene homopolymer (G1) and an ethylene-1-butene random copolymer (G2) as a rubber component (G) may be used in combination with the crystalline propylene-ethylene block copolymer.

A preferable composition of the resin component that may include the rubber component consists of 83% by weight or more and 100% by weight or less of the crystalline propylene-ethylene block copolymer, 0% by weight or more and 7% by weight or less of the propylene homopolymer (G1), and 0% by weight or more and 10% by weight or less of the ethylene-1-butene random copolymer (G2) based on 100% by weight of the entire resin component.

### (G1) Propylene Homopolymer

The MFR (ASTM D1238, measured at 230°C and a load of 2160 g) of the propylene homopolymer (G1) is preferably in the range of 0.1 g/10 min or more and 50 g/10 min or less, more preferably in the range of 0.2 g/10 min or more and 40 g/10 min or less. The molecular weight distribution Mw/Mn (Mw: weight average molecular weight, Mn: number average molecular weight) measured by a gel permeation chromatograph (GPC) method is preferably 10 or more, more preferably 12 or more and 20 or less, and particularly preferably in the range of 13 or more and 18 or less. The molecular weight distribution Mz/Mw (Mz: z-average molecular weight) is preferably 3.5 or more, more preferably 4.0 or more and 15 or less, and particularly preferably 4.2 or more and 10 or less.

The molecular weight distribution Mw/Mn being 10 or more and the molecular weight distribution Mz/Mw being 3.5 or more indicate that the propylene homopolymer (G1) has a wide distribution on the high molecular weight side compared with ordinary polypropylene.

The propylene homopolymer (G1) is preferably a composition consisting of
(a-1) a high molecular weight polypropylene portion having a limiting viscosity [η] of 6 dl/g or more and 13 dl/g or less, preferably 7 dl/g or more and 12 dl/g or less, as measured in 135°C decalin, and
(a-2) a low molecular weight polypropylene portion having a limiting viscosity [η] of less than 6 dl/g as measured in 135°C decalin.

Based on the entire room temperature n-decane insoluble portion, the high molecular weight polypropylene portion (a-1) is preferably in an amount of 10% by weight or more and 50% by weight or less, more preferably in the range of 15% by weight or more and 40% by weight or less, while the low molecular weight polypropylene portion (a-2) is preferably in an amount of 50% by weight or more and 90% by weight or less, more preferably in the range of 60% by weight or more and 85% by weight or less.

As the propylene homopolymer (G1), a product produced by a known method described, for example, in Patent Literature 3, or a commercial product can be utilized.

By using the propylene homopolymer (G1), a polyolefin-based resin composition with which few flow marks occur in a molded article can be obtained.

### (G2) Ethylene-1-Butene Random Copolymer

The MFR (ASTM D1238, measured at 230°C and a load of 2160 g) of the ethylene-1-butene random copolymer is preferably 1 g/10 min or more and 20 g/10 min or less, more preferably 2 g/10 min or more and 10 g/10 min or less.

The ethylene-1-butene random copolymer is a random copolymer of ethylene and 1-butene, and the content of a constituent unit derived from 1-butene (1-butene content) is preferably 5% by weight or more and 50% by weight or less, more preferably 10% by weight or more and 40% by weight or less, in obtaining target rubbery properties.

The density (ASTM D1505) of the ethylene-1-butene random copolymer is preferably within the range of 0.860 g/cm³ or more and 0.920 g/cm³ or less from the viewpoint of providing rigidity and impact resistance to a molded article.

As the ethylene-1-butene random copolymer (G2), a product produced by a known method described, for example, in Patent Literature 3, or a commercial product can be utilized.

The rubber component (G) can be used in various forms for the preparation of the polyolefin-based resin composition.

### (A2) Talc

The resin material component may include talc in addition to the resin component. Talc is preferably included in an amount of up to 40% by weight based on 100% by weight of the total amount of talc and the polyolefin-based resin as the resin component. That is, the resin material component preferably includes 60% by weight or more and 100% by weight or less of the polyolefin-based resin and 0% by weight or more and 40% by weight or less of talc based on 100% by weight of the total amount of the polyolefin-based resin and talc.

Further, the resin material component more preferably includes 60% by weight or more and 95% by weight or less of the polyolefin-based resin and 5% by weight or more and 40% by weight or less of talc based on 100% by weight of the total amount of the polyolefin-based resin and talc.

The average particle diameter of talc is preferably in the range of 1.5 µm or more and 5.0 µm or less.

By adding talc, the fogging properties can be decreased while good dispersibility of the colorant is maintained.

As the reason why the fogging properties decrease by the addition of talc, the possibility is considered that talc as a filler that replaces part of the resin component suppresses the volatilization of a component that increases fogging properties.

A preferable composition when the resin material component is prepared from the crystalline propylene-ethylene block copolymer (A1A), the propylene homopolymer (G1), the ethylene-1-butene random copolymer (G2), and the talc (A2) is as follows:
- (A1A): 58% by weight or more and 83% by weight or less
- (G1): 0.5% by weight or more and 7% by weight or less
- (G2): 1% by weight or more and 10% by weight or less
- (A2): 15% by weight or more and 25% by weight or less

In the composition, the total of the component (A1A), the component (G1), the component (G2), and the component (A2) is 100% by weight.

### (B) Colorant

The colorant including at least one pigment selected from the group consisting of carbon black and an organic pigment is dosed in a proportion selected from the range of 0.01 parts by weight or more and 2.0 parts by weight or less, preferably in a proportion selected from the range of 0.01 parts by weight or more and 1.0 part by weight or less, based on 100 parts by weight of the resin material component.

The colorant can be provided in the following forms:
(A) A colorant formed of carbon black alone.
(B) A colorant formed of an organic pigment alone.
(C) A colorant consisting of carbon black and an organic pigment.
(D) A colorant consisting of a combination of carbon black or an organic pigment and a colorant other than these.
(E) A colorant consisting of a combination of carbon black and an organic pigment and a colorant other than these.

Examples of the colorant other than carbon black and an organic pigment can include an inorganic pigment.

The carbon black, the organic pigment, and the inorganic pigment are not particularly limited as long as they can be utilized for resin molded articles. They can be appropriately selected for use from those known for use in resin molded articles, those widely used, or those commercially available.

The dosage proportion of carbon black can be selected from the range of 0.01 parts by weight or more and 2.0 parts by weight or less and is preferably selected from the range of 0.01 parts by weight or more and 1.0 part by weight or less, based on 100 parts by weight of the resin material component.

The dosage proportion of the organic pigment can be selected from the range of 0.01 parts by weight or more and 2.0 parts by weight or less and is preferably selected from the range of 0.01 parts by weight or more and 1.0 part by weight or less, based on 100 parts by weight of the resin material component.

As carbon black, one carbon black can be used alone, or two or more different carbon blacks can be used in combination.

Specific examples of the organic pigment can include, for example, soluble azo pigments, insoluble azo pigments, polyazo pigments, anthraquinone-based pigments, phthalocyanine-based pigments, quinacridone-based pigments, perinone-perylene-based pigments, azomethine-based pigments, isoindolinone-based pigments, isoindoline-based pigments, and pyrrolopyrrole-based pigments. One organic pigment can be used alone, or two or more different organic pigments can be used in combination.

Specific examples of the inorganic pigment can include, for example, titanium oxide-based pigments, yellow iron oxide, colcothar (iron oxide red), chromium oxide, ultramarine blue, and complex oxide pigments. One inorganic pigment can be used alone, or two or more different inorganic pigments can be used in combination.

The colorant can be used in various forms for the preparation of the polyolefin-based resin composition.

### (C) Dispersing Agent

In the present invention, as the dispersing agent for the colorant, a synthetic wax that is a powder having an average particle diameter of 1 µm or more and 40 µm or less is used.

By setting the average particle diameter of the synthetic wax in the range, the synthetic wax can be effectively disposed between the colorant particles to prevent the aggregation of the colorant particles to improve the dispersibility of the colorant in the resin component.

The dosage proportion of the synthetic wax is selected from the range of 0.01 parts by weight or more and 2.0 parts by weight or less, preferably from the range of 0.2 parts by weight or more and 1 part by weight or less, based on 100 parts by weight of the resin material component.

When talc is added, the synthetic wax is preferably dosed in an amount selected from the range of 1.5 parts by weight or more and 10 parts by weight or less based on 100 parts by weight of talc.

The synthetic wax is preferably used in the range of 0.2 parts by weight or more and 1 part by weight or less based on 100 parts by weight of the crystalline propylene-ethylene block copolymer included in the resin material component.

The dosage proportion of the synthetic wax to carbon black is preferably 3.3 parts by weight or more or 5 parts by weight or more of the synthetic wax to 5 parts by weight of carbon black.

The dosage proportion of the synthetic wax to the organic pigment is preferably 1.5 parts by weight or more or 4 parts by weight or more of the synthetic wax to 6 parts by weight of the organic pigment.

The dosage proportion of the synthetic wax to the inorganic pigment is preferably 2 parts by weight or more of the synthetic wax to 8 parts by weight of the inorganic pigment.

As the synthetic wax, hydrocarbon-based synthetic waxes such as polyethylene waxes and polypropylene waxes are preferable, and among these, polypropylene waxes are more preferable.

One synthetic wax can be used alone, or two or more synthetic waxes can be used in combination.

The number average molecular weight (Mn) of the synthetic wax is preferably 2,000 or more and 20,000 or less.

### (D) Light Resistant Stabilizer

The polyolefin-based resin composition may include a light resistant stabilizer from the viewpoint of providing target light resistance to a molded article such as an automobile interior part and obtaining a low gloss molded article.

As the light resistant stabilizer, a light resistant stabilizer having a weight average molecular weight (Mw) of 700 or more, preferably 700 or more and 80000 or less, and containing N-H and N-CH₃ groups in the molecule is preferable. Examples of such a light resistant stabilizer include hindered amine light stabilizers (HALS). A hindered amine light stabilizer having a weight average molecular weight of 700 or more is less likely to sublime from a molded article, and, for example, even in an automobile at high temperature, the window glass does not cloud.

Examples of preferable specific compounds for the light resistant stabilizer (E) include, for example, 1,6-hexanediamine, tetrakis(1,2,2,6,6-pentamethyl-4-piperidyl)-1,2,3,4-butanetetracarboxylate (trade name, ADK STAB LA-52, manufactured by ADEKA Corporation, Mw = 847), N,N'-bis(2,2,6.6-tetramethyl-4-piperidinyl) polymers, ADK STAB LA-63P (trade name; manufactured by ADEKA Corporation, molecular weight = about 2000), and [2,2,6,6-tetramethyl-4-piperidyl /βββ'β'-tetramethyl-3,9-[2,4,8,10-tetraoxaspiro(5,5)undecane]diethyl]-1,2,3,4-butanetetrate carboxylate (trade name, ADK STAB LA-68, manufactured by ADEKA Corporation, molecular weight = about 1900).

The light resistant stabilizer is preferably used in the proportion of 0.01 to 5 parts by weight, more preferably 0.03 to 3 parts by weight, based on 100 parts by weight of the resin component (A1). When the light resistant stabilizer is used in a proportion in this range, a molded article that is excellent in light resistance, for example, can satisfy the light resistance required of automobile interior parts, and moreover has low gloss can be obtained.

### (E) Other Components

In addition to the above components, other additives such as a heat resistance stabilizer, an antistatic agent, a weathering stabilizer, an anti-aging agent, an antioxidant, a fatty acid metal salt, a softening agent, a filler other than talc, and a lubricant can be blended into the polyolefin-based resin composition in a range that does not impair the object of the present invention.

The light resistant stabilizer and other components can be used in various forms for the preparation of the polyolefin-based resin composition.

The polyolefin-based resin composition according to the present invention can be provided in various forms to various types of applications such as the production of colored resin pellets and the molding of a molded article. An example of one preferable form of this polyolefin-based resin composition can include a dry blend.

The polyolefin-based resin composition as a dry blend, that is, a dry blend preparation or a dry blend composition, includes a mixture obtained by dry-mixing a resin material component, a colorant, and a dispersing agent in the form of solid particles. In this mixture, these components in the form of particles are mixed while maintaining the form of particles. Therefore, this mixture is different from a masterbatch which is prepared by blending resin pellets and a high concentration pigment and melting and kneading the resin pellets by an extruder followed by extrusion in the form of pellets and in which the pigment particles are bound by the resin.

The polyolefin-based resin as the resin component can be used in the form of solid particles such as a powder or pellets for the preparation of a dry blend.

For the preparation of the polyolefin-based resin composition as a dry blend, a resin material component, a colorant, and a dispersing agent as indispensable components and a light resistant stabilizer and at least one of other components used as needed can be used in the form of solid particles such as a powder.

The polyolefin-based resin composition as a dry blend preferably includes a polyolefin-based resin in the form of pellets.

When the rubber component (G) is used, the rubber component (G) may be used in the form of solid particles such as a powder or pellets for the preparation of a dry blend.

The preparation of the polyolefin-based resin composition as a dry blend can be performed by dry-blending (dry-mixing) components using a mixing machine such as a tumbler. The components may be charged into the mixing machine at one time, or the components may be divided into at least two and charged in order, and the conditions regarding the charging of the components into the mixing machine are not particularly limited.

The polyolefin-based resin composition according to the present invention can be used in the form of colored resin pellets for the production of a molded article.

The production of colored resin pellets can be performed by mixing the components of the polyolefin-based resin composition, melting the mixture, solidifying the mixture, and molding the mixture in the form of pellets. For the mixing of the components and the pelletization of the obtained mixture, known methods can be utilized. The order of mixing the components is not particularly limited and should be appropriately selected according to the method of pelletization. Examples of the method of pelletization can include, for example, a method of mixing a colorant with a synthetic wax in a molten state by a mixing machine such as a three-roll mill, melt-mixing the obtained mixture with a resin material component, and solidifying and pelletizing the mixture, and a method of dry-mixing components to prepare a dry blend, melt-mixing the dry blend, and solidifying and pelletizing the mixture.

A method for producing colored resin pellets according to the present invention is a method that can produce colored resin pellets for molding by melt-mixing the components of a polypropylene-based resin composition and solidifying and pelletizing the mixture. This production method according to the present invention is different from a method of using resin pellets and a high concentration coloring pigment, that is, further adding resin pellets to a masterbatch prepared with the dosage proportion of a coloring pigment to resin pellets being high, melt-mixing them, and solidifying the mixture to obtain colored resin pellets for molding.

As the method for producing colored resin pellets, a method having the step of melt-extruding and pelletizing a polyolefin-based resin composition prepared as a dry blend is preferable from the viewpoint of, for example, operability and the ease of the control of coloring density.

The colored resin pellets can be melt-molded to obtain a colored molded article. A method for molding a molded article using colored resin pellets should be selected according to a target molded article.

The molded article thus obtained has good colorant dispersibility and low fogging properties and is preferably used for products which meet the eye and with which fogging is a problem, like the interior articles and interior members of automobiles. Examples of the automobile interior members include, for example, instrument panels, glow boxes, console boxes, door trims, pillar trims, and steering column covers.

### Examples

The present invention will be more specifically described below based on Examples and Comparative Examples, but the present invention is not limited to these Examples.

Colored resin pellets obtained in the Examples and the Comparative Examples were evaluated by the following tests.

### (Test Methods)

### (1) Colorant Dispersibility Test

Colored resin pellets were thinly sheeted by a press (molding temperature 220°C) to fabricate a sample sheet for a test (50 mm × 50 mm ×: 0.04 mm thick), and whether visually observable aggregates of the colorant occurred or not was observed on a monitor by a microscope (50x). The dispersibility of the colorant was quantified by the total area occupied by the aggregates of the colorant, St, in a measurable region (area: about 40 mm²), and dispersed state level classification was performed to evaluate the dispersibility.

The dispersed state level classification followed the following provisions:
Lv1 (very poor): 0.5 mm² < St (a state in which the aggregates of the pigment spread significantly in the region)
Lv2 (poor): 0.3 mm² < St ≤ 0.5 mm² (a state in which the aggregates of the pigment spread clearly in the region)
Lv3 (good): 0.1 mm² < St ≤ 0.3 mm² (a state in which the aggregates of the pigment spread sparsely in the region)
Lv4 (very good): St ≤ 0.1 mm² (a state in which the aggregates of the pigment are slightly seen in the region)

### (2) Fogging Property Test (Glass Haziness Property Test)

A fogging property test was performed in accordance with the provisions of ISO 6452.

Colored resin pellets were thinly sheeted (25 mm × 100 mm × 2 mm thick) by a press (molding temperature 220°C) to form a sample sheet for a test and the sample was charged into a wide-mouthed bottle, and the wide-mouthed bottle was covered with a glass plate having a haze of 0% and sealed. The wide-mouthed bottle in which the sample sheet was sealed was immersed in a 100°C oil bath for 24 h. After 24 h, the haze of the glass plate used for the lid was measured by a usual method, and the fogging properties were evaluated by the obtained measured value.

The "fogging properties" are characteristics that indicate the extent of fogging caused by a molded article, evaluated by the haze value obtained by the test method. A low haze value indicates that the molded article does not cause fogging or the extent of fogging is low, and a high haze value indicates that the extent of fogging is high.

In the following Examples and Comparative Examples, as one example of the threshold of the haze value, "3" when only a resin component was used (Reference Example 1) was adopted. When the haze value is "3 or less", target low fogging properties are obtained.

The number average molecular weight and average particle diameter of the dispersing agent were measured by the following methods.

### (1) Number Average Molecular Weight (Mn) of Dispersing Agent

A gel permeation chromatograph model HLC-8321 GPC/HT (manufactured by Tosoh Corporation) was used. For the columns, TSKgel column (manufactured by Tosoh Corporation) × 2 (each 7.5 mm I.D. × 30 cm, Tosoh Corporation) were used. For the mobile phase, o-dichlorobenzene (Wako Pure Chemical, special grade reagent) was used. Measurement was carried out under the conditions of a column temperature of 140°C and a mobile phase flow rate of 1.0 mL/min. The number average molecular weight (Mn) was measured using a differential refractometer for detection and polystyrene for molecular weight calibration.

### (2) Average Particle Diameter (D50) of Dispersing Agent

The average particle diameter (D50) was measured under the conditions of a circulation rate of 60%, 1 min with an ultrasonic homogenizer built in an apparatus, and an output of 40 W, using a laser diffraction method.

### (Example 1)

0.5 Parts by weight of carbon black (amount of oil absorbed: 95 ml/100 g) as a colorant and 0.33 parts by weight of a micronized polypropylene wax having an average particle diameter (laser diffraction method, D50) of 10 µm and a number average molecular weight (Mn) of 3,460, as a dispersing agent, were mixed with 100 parts by weight of a crystalline propylene-ethylene block copolymer (A1a) in the form of pellets having properties shown in Table 1, as a resin component, by a tumbler for 10 min. Subsequently, the mixture was melted and kneaded by a twin-screw extruder and pelletized to obtain colored resin pellets.

### [Table 1]

**Table 1**

| | | | |
|---|---|---|---|
| Crystalline propylene-ethylene block copolymer (A1a) | 23°C n-decane insoluble content: | | |
| | mmmm fraction of propylene homopolymer portion | | 98.1 |
| | 23°C n-decane soluble content: | | |
| | | Soluble content weight (% by weight) | 23 |
| | | Ethylene content (mol %) | 40 |
| | | Limiting viscosity measured in 135°C decalin ([η]a)(dl/g) | 2.5 |
| | MFR (g/10 min) | | 29 |

The value of the mmmm fraction of the propylene homopolymer portion is the value obtained by calculating the proportion of the pentad sequence mmmm unit to all propylene units in homopolypropylene included in n-decane insoluble content using a ¹³C-NMR (Nuclear Magnetic Resonance) spectrum obtained from a sample.

The value of MFR is the value measured under the conditions of 230°C and a load of 2.16 kg in accordance with ASTM D1238.

The ethylene content is the value measured by a FT-IR method (Fourier transform infrared spectroscopy).

### (Example 2)

Colored resin pellets were obtained as in Example 1 except that as the dispersing agent, a micronized polyethylene wax having an average particle diameter (laser diffraction method, D50) of 5 µm and a number average molecular weight (Mn) of 2,250 was used instead of the micronized polypropylene wax.

### (Comparative Example 1)

Colored resin pellets were obtained as in Example 1 except that as the dispersing agent, magnesium stearate having an average particle diameter (laser diffraction method, D50) of 26 µm was used instead of the micronized polypropylene wax.

### (Comparative Example 2)

Colored resin pellets were obtained as in Example 1 except that as the dispersing agent, a polypropylene wax having an average particle diameter (laser diffraction method, D50) of 178 µm was used instead of the micronized polypropylene wax.

The composition of the polyolefin-based resin compositions used in Examples 1 and 2 and Comparative Examples 1 and 2 and the evaluation results of the colored resin pellets are shown in Table 2.

### (Reference Example 1)

Resin pellets were obtained as in Example 1 except that only the crystalline propylene-ethylene block copolymer (A1a) was used. When the fogging properties of the obtained resin pellets were evaluated, they were 3%.

### [Table 2]

**Table 2**

| Component | Material | | Example 1 | Example 2 | Comparative Example 1 | Comparative Example 2 |
|---|---|---|---|---|---|---|
| Resin material component (A) (parts by weight) | Resin component (A1) | Crystalline propylene-ethylene block copolymer (A1a) | 100 | 100 | 100 | 100 |
| Colorant (B) (parts by weight) | Carbon black | | 0.5 | 0.5 | 0.5 | 0.5 |
| | Magnesium stearate | | - | - | 0.33 | - |
| Dispersing agent (C) (parts by weight) | Micronized polyethylene wax | - | 0.33 | - | - | |
| | Micronized polypropylene wax | 0.33 | - | - | - | |
| | Polypropylene wax | - | - | - | 0.33 | |
| Evaluation results | Dispersibility test (Lv) | 4 | 3 | 1 | 2 | |
| | Fogging property test (%) | 3 or less | 3 or less | 10 or more | 3 or less | |

### (Example 3)

Colored resin pellets were obtained as in Example 1 except that 0.28 parts by weight of copper phthalocyanine blue (Pigment Blue 15:1) as an organic pigment and 0.07 parts by weight of the micronized polypropylene wax having an average particle diameter (laser diffraction method, D50) of 10 µm and a number average molecular weight (Mn) of 3,460, as a dispersing agent were used based on 100 parts by weight of the crystalline propylene-ethylene block copolymer (A1a) in the form of pellets having the properties shown in Table 1, as a resin material component.

### (Example 4)

Colored resin pellets were obtained as in Example 3 except that the dosage proportion of the micronized polypropylene wax as a dispersing agent was 0.187 parts by weight to 100 parts by weight of the crystalline propylene-ethylene block copolymer (A1a).

### (Example 5)

Colored resin pellets were obtained as in Example 4 except that as the dispersing agent, a micronized polyethylene wax having an average particle diameter (laser diffraction method, D50) of 5 µm and a number average molecular weight (Mn) of 2,250 was used instead of the micronized polypropylene wax.

### (Comparative Example 3)

Colored resin pellets were obtained as in Example 3 except that as the dispersing agent, magnesium stearate having an average particle diameter (laser diffraction method, D50) of 26 µm was used instead of the micronized polypropylene wax.

### (Comparative Example 4)

Colored resin pellets were obtained as in Example 4 except that as the dispersing agent, a polyethylene wax having an average particle diameter (laser diffraction method, D50) of 224 µm was used instead of the micronized polypropylene wax.

### (Comparative Example 5)

Colored resin pellets were obtained as in Example 3 except that as the dispersing agent, a polypropylene wax having an average particle diameter (laser diffraction method, D50) of 178 µm was used instead of the micronized polypropylene wax.

The composition of the polyolefin-based resin compositions used in Examples 3 to 5 and Comparative Examples 3 to 5 and the evaluation results of the colored resin pellets are shown in Table 3.

### [Table 3]

**Table 3**

| Component | Material | | Example 3 | Example 4 | Example 5 | Comparative Example 3 | Comparative Example 4 | Comparative Example 5 |
|---|---|---|---|---|---|---|---|---|
| Resin material component (A) (parts by weight) | Resin component (A1) | Crystalline propylene-ethylene block copolymer (A1a) | 100 | 100 | 100 | 100 | 100 | 100 |
| Colorant (B) (parts by weight) | Copper phthalocyanine blue | | 0.28 | 0.28 | 0.28 | 0.28 | 0.28 | 0.28 |
| Dispersing agent (C) (parts by weight) | Magnesium stearate | | - | - | - | 0.070 | - | - |
| | Micronized polyethylene wax | | - | - | 0.187 | - | - | - |
| | Polyethylene wax | | - | - | - | - | 0.187 | - |
| | Micronized polypropylene wax | | 0.070 | 0.187 | - | - | - | - |
| | Polypropylene wax | | - | - | - | - | - | 0.070 |
| Evaluation results | Dispersibility test (Lv) | | 4 | 4 | 3 | 2 | 2 | 2 |
| | Fogging property test (%) | | 3 or less | 3 or less | 3 or less | 6 or more | 3 or less | 3 or less |

### (Examples 6 and 7)

Colored resin pellets were obtained as in Examples 1 and 2 except that 100 parts by weight of a resin material component consisting of 80 parts by weight of the crystalline propylene-ethylene block copolymer (A1a) and 20 parts by weight of talc (A2) was used instead of 100 parts by weight of the crystalline propylene-ethylene block copolymer (A1a).

### (Comparative Examples 6 and 7)

Colored resin pellets were obtained as in Example 6 except that the type of the dispersing agent and the dosage proportion of the dispersing agent were changed as shown in Table 4.

As the dispersing agent, magnesium stearate having an average particle diameter (laser diffraction method, D50) of 26 µm was used in Comparative Example 6, and a polypropylene wax having an average particle diameter (laser diffraction method, D50) of 178 µm was used in Comparative Example 7.

The composition of the polyolefin-based resin compositions used in Examples 6 and 7 and Comparative Examples 6 and 7 and the evaluation results of the colored resin pellets are shown in Table 4.

### [Table 4]

**Table 4**

| Component | Material | | Example 6 | Example 7 | Comparative Example 6 | Comparative Example 7 |
|---|---|---|---|---|---|---|
| Resin material component (A) (parts by weight) | Resin component (A1) | Crystalline propylene-ethylene block copolymer (A1a) | 80 | 80 | 80 | 80 |
| | Talc (A2) | | 20 | 20 | 20 | 20 |
| Colorant (B) (parts by weight) | Carbon black | | 0.5 | 0.5 | 0.5 | 0.5 |
| Dispersing agent (C) (parts by weight) | Magnesium stearate | | - | - | 0.33 | - |
| | Micronized polyethylene wax | | - | 0.33 | - | - |
| | Micronized polypropylene wax | | 0.33 | - | - | - |
| | Polypropylene wax | | - | - | - | 0.33 |
| Evaluation results | Dispersibility test (Lv) | | 4 | 3 | 2 | 2-3 |
| | Fogging property test (%) | | 1 or less | 1 or less | 10 or more | 1 or less |

### (Examples 8 to 10)

Colored resin pellets were obtained as in Examples 3 to 5 except that 100 parts by weight of a resin material component consisting of 80 parts by weight of the crystalline propylene-ethylene block copolymer (A1a) and 20 parts by weight of the talc (A2) was used instead of 100 parts by weight of the crystalline propylene-ethylene block copolymer (A1a) .

### (Comparative Examples 8 to 11)

Colored resin pellets were obtained as in Example 8 or 9 except that the type of the dispersing agent and the dosage proportion of the dispersing agent were changed as shown in Table 5.

As the dispersing agent, magnesium stearate having an average particle diameter (laser diffraction method, D50) of 26 µm was used in Comparative Examples 8 and 9, a polypropylene wax having an average particle diameter (laser diffraction method, D50) of 178 µm was used in Comparative Example 10, and a polyethylene wax having an average particle diameter (laser diffraction method, D50) of 224 µm was used in Comparative Example 11.

The composition of the polyolefin-based resin compositions used in Examples 8 to 10 and Comparative Examples 8 to 11 and the evaluation results of the colored resin pellets are shown in Table 5.

### (Reference Example 2)

Resin pellets were obtained as in Example 8 except that only the crystalline propylene-ethylene block copolymer (A1a) and talc were used. When the fogging properties of the obtained resin pellets were evaluated, they were 1%.

### [Table 5]

**Table 5**

| Component | Material | | Example 8 | Example 9 | Example 10 | Comparative Example 8 | Comparative Example 9 | Comparative Example 10 | Comparative Example 11 |
|---|---|---|---|---|---|---|---|---|---|
| Resin material component (A) (parts by weight) | Resin component (A1) | Crystalline propylene-ethylene block copolymer (A1a) | 80 | 80 | 80 | 80 | 80 | 80 | 80 |
| | Talc (A2) | | 20 | 20 | 20 | 20 | 20 | 20 | 20 |
| Colorant (B) (parts by weight) | Copper phthalocyanine blue | | 0.28 | 0.28 | 0.28 | 0.28 | 0.28 | 0.28 | 0.28 |
| Dispersing agent (C) (parts by weight) | Magnesium stearate | | - | - | - | 0.070 | 0.187 | - | - |
| | Micronized polyethylene wax | | - | - | 0.187 | - | - | - | - |
| | Polyethylene wax | | - | - | - | - | - | - | 0.070 |
| | Micronized polypropylene wax | | 0.070 | 0.187 | - | - | - | - | - |
| | Polypropylene wax | | - | - | - | - | - | 0.070 | - |
| Evaluation results | Dispersibility test (Lv) | | 4 | 4 | 3 | 2 | 3 | 2 | 2 |
| | Fogging property test (%) | | 1 or less | 1 or less | 1 or less | 2 or less | 10 or more | 1 or less | 1 or less |

### (Examples 11 and 12)

Colored resin pellets were obtained as in Examples 6 and 7 except that 80 parts by weight of the following resin component was used instead of 80 parts by weight of the crystalline propylene-ethylene block copolymer (A1a), and carbon black and copper phthalocyanine blue (Pigment Blue 15:1) as a colorant, and a dispersing agent were used in dosage proportions shown in Table 6.

### Resin component

- Crystalline propylene-ethylene block copolymer (A1a): 72 parts by weight
- Propylene homopolymer (G1) (Mw/Mn = 15, Mz/Mw = 5, MFR = 3 g/10 min): 4 parts by weight
- Ethylene-1-butene random copolymer (G2): 4 parts by weight

The MFR is the value measured under the conditions of 230°C and a load of 2.16 kg in accordance with ASTM D1238.

The Mw/Mn and Mz/Mw are the values measured by a gel permeation chromatography (GPC) method.

The GPC measurement conditions are as follows:
Apparatus: manufactured by Waters, GPC150CV
Columns: manufactured by Polymer Laboratories Ltd., PL columns (Mixed-B, 350 mm × 2)
Data processing apparatus: Millennium
Measurement temperature: 135°C
Measurement solvent: ortho-dichlorobenzene

### (Comparative Examples 12 and 13)

Colored resin pellets were obtained as in Example 11 except that the type of the dispersing agent and the dosage proportion of the dispersing agent were changed as shown in Table 6.

As the dispersing agent, magnesium stearate having an average particle diameter (laser diffraction method, D50) of 26 µm was used in Comparative Example 12, and a polypropylene wax having an average particle diameter (laser diffraction method, D50) of 178 µm was used in Comparative Example 13.

The composition of the polyolefin-based resin compositions used in Examples 11 and 12 and Comparative Examples 12 and 13 and the evaluation results of the colored resin pellets are shown in Table 6.

### (Reference Example 3)

Resin pellets were obtained as in Example 11 except that only the resin material component [the component (A1a), the component (G1), the component (G2), and the component (A2)] was used. When the fogging properties of the obtained resin pellets were evaluated, they were 3%.

### [Table 6]

**Table 6**

| Component | Material | | Example 11 | Example 12 | Comparative Example 12 | Comparative Example 13 |
|---|---|---|---|---|---|---|
| Resin material component (A) (parts by weight) | Resin component (A1) | Crystalline propylene-ethylene block copolymer (A1a) | 72 | 72 | 72 | 72 |
| | | Propylene homopolymer(G1) | 4 | 4 | 4 | 4 |
| | | Ethylene-1-butene random copolymer (G2) | 4 | 4 | 4 | 4 |
| | Talc (A2) | | 20 | 20 | 20 | 20 |
| Colorant (B) (parts by weight) | Carbon black | | 0.5 | 0.5 | 0.5 | 0.5 |
| | Copper phthalocyanine blue | | 0.28 | 0.28 | 0.28 | 0.28 |
| Dispersing agent (C) (parts by weight) | Magnesium stearate | | - | - | 0.5 | - |
| | Micronized polyethylene wax | | - | 0.5 | - | - |
| | Micronized polypropylene wax | | 0.5 | - | - | - |
| | Polypropylene wax | - | - | - | 0.5 | |
| Evaluation results | Dispersibility test (Lv) | 3 | 2-3 | 1 | 1 | |
| | Fogging property test (%) | 3 or less | 3 or less | 10 or more | 3 or less | |

As shown in Table 2 to Table 6, in Examples 1 to 12 in which the micronized polypropylene wax or the micronized polyethylene wax was used as the dispersing agent, good dispersibility of the colorant and low fogging properties in the molded articles were obtained.

When Examples 1, 3, 4, 6, 8, 9, and 11 were compared with Examples 2, 5, 7, 10, and 12, the micronized polypropylene wax was more effective than the micronized polyethylene wax for the dispersibility of the colorant.

When Examples 1 to 12 were compared with Comparative Examples 2, 4, 5, 7, 10, 11, and 13, differences were seen in the dispersibility of the colorant depending on the particle diameter of the wax.

When Examples 1 to 5 were compared with Examples 6 to 10, the fogging properties could be further decreased, while good dispersibility of the colorant was maintained, by dosing talc.

On the other hand, in Comparative Examples 1, 3, 6, 8, 9, and 12 in which magnesium stearate as a metallic soap was used as the dispersing agent for the colorant, the
dispersibility of the colorant decreased, and the value of fogging properties increased, compared with Examples 1 to 12.

### Industrial Applicability

The polyolefin-based resin composition according to the present invention can be utilized as resin materials for molding in various industrial fields, for example, daily necessities, the field of construction, the field of household appliances, and automobile parts, and can be particularly preferably utilized as resin materials for the molding of molded articles as the interior articles and interior members of automobiles.

## Claims

1. A polyolefin-based resin composition comprising 0.01 parts by weight or more and 2.0 parts by weight or less of a colorant comprising at least one pigment selected from a group consisting of carbon black and an organic pigment, and
0.01 parts by weight or more and 2.0 parts by weight or less of a synthetic wax having an average particle diameter of 1 µm or more and 40 µm or less,
based on 100 parts by weight of a resin material component including a polyolefin-based resin.

2. The polyolefin-based resin composition according to claim 1, wherein the synthetic wax is a polypropylene wax.

3. The polyolefin-based resin composition according to claim 1, wherein a number average molecular weight (Mn) of the synthetic wax is 2,000 or more and 20,000 or less.

4. The polyolefin-based resin composition according to claim 1, wherein the polyolefin-based resin is a polypropylene-based resin having a melt flow rate (MFR: ASTM D1238, 230°C, 2160 g load) of 1 g/10 min or more and 100 g/10 min or less.

5. The polyolefin-based resin composition according to claim 4, wherein the polypropylene-based resin is a crystalline propylene-ethylene block copolymer having a n-decane soluble content of 17% by weight or more and 25% by weight or less at room temperature, an MFR (ASTM D1238, 230°C, load 2160 g) of 20 g/10 min or more and 40 g/10 min or less, and a mmmm fraction (isotactic pentad fraction) of more than 95.7%.

6. The polyolefin-based resin composition according to claim 1, wherein the resin material component is formed of the polyolefin-based resin.

7. The polyolefin-based resin composition according to claim 1, wherein the resin material component comprises 60% by weight or more and 100% by weight or less of the polyolefin-based resin and 0% by weight or more and 40% by weight or less of talc based on 100% by weight of a total amount of the polyolefin-based resin and the talc.

8. The polyolefin-based resin composition according to claim 7, comprising 60% by weight or more and 95% by weight or less of the polyolefin-based resin and 5% by weight or more and 40% by weight or less of the talc based on 100% by weight of the total amount of the polyolefin-based resin and the talc.

9. The polyolefin-based resin composition according to claim 1, wherein the colorant is formed of the carbon black.

10. The polyolefin-based resin composition according to claim 1, wherein the colorant consists of the carbon black and the organic pigment.

11. The polyolefin-based resin composition according to claim 1, wherein the colorant is formed of the organic pigment.

12. The polyolefin-based resin composition according to claim 1, wherein the polyolefin-based resin is in a form of a pellet.

13. The polyolefin-based resin composition according to claim 12, being a dry blend.

14. A colored resin pellet obtained by melt-extruding the polyolefin-based resin composition according to any one of claims 1 to 11 and molding the polyolefin-based resin composition in a form of a pellet.

15. The colored resin pellet according to claim 14, being for production of a molded article.

16. The colored resin pellet according to claim 15, wherein the molded article is an interior article or interior member of an automobile.

17. A method for producing a colored resin pellet, comprising melt-extruding the polyolefin-based resin composition according to any one of claims 1 to 11 and molding the polyolefin-based resin composition in a form of a pellet.

18. The method for producing a colored resin pellet according to claim 17, wherein the colored resin pellet is for production of a molded article.

19. The method for producing a colored resin pellet according to claim 18, wherein the molded article is an interior article or interior member of an automobile.
